# EUROPÄISCHE PATENTSCHRIFT

(11) **EP 4 161 818 B1**
(45) Veröffentlichungstag und Bekanntmachung des Hinweises auf die Patenterteilung: **15.10.2025**
(21) Anmeldenummer: 21727377.0
(22) Anmeldetag: 12.05.2021
(51) Int. Cl.: B62D 15/02

(54) **VERFAHREN UND FAHRERASSISTENZSYSTEM ZUR EINPARKASSISTENZ FÜR EIN KRAFTFAHRZEUG**
METHOD AND DRIVER ASSISTANCE SYSTEM FOR PARKING ASSISTANCE FOR A MOTOR VEHICLE
PROCÉDÉ ET SYSTÈME D'AIDE À LA CONDUITE POUR UNE AIDE AU STATIONNEMENT POUR UN VÉHICULE À MOTEUR

(30) Priorität: 09.06.2020 DE 102020207233
(43) Veröffentlichungstag der Anmeldung: 12.04.2023
(73) Patentinhaber: Volkswagen Aktiengesellschaft, 38440 Wolfsburg (DE)
(72) Erfinder: SEELAND, Jana, 38448 Wolfsburg (DE); CALLIES, Leonie, 10557 Berlin (DE); HESSEL, Toralf, 13187 Berlin (DE)
(86) Internationale Anmeldenummer: PCT/EP2021/062586
(87) Internationale Veröffentlichungsnummer: WO 2021/249714

(56) Entgegenhaltungen:
- DE-A1- 102004 047 484
- DE-A1- 102005 008 875
- DE-A1- 102018 215 525

## Beschreibung

Die vorliegende Erfindung betrifft ein Verfahren zur Einparkassistenz für ein Kraftfahrzeug bei einem manuell gelenkten Einparkmanöver, wobei mittels eines Umfeldsensorsystems des Kraftfahrzeugs Sensordaten erzeugt werden, welche eine Umgebung des Kraftfahrzeugs repräsentieren, mittels einer Recheneinheit des Kraftfahrzeugs wenigstens eine Referenztrajektorie für das Kraftfahrzeug abhängig von den Sensordaten bestimmt wird und ein Istwert eines während des Einparkmanövers veränderlichen Parameters des Kraftfahrzeugs zu einem ersten Zeitpunkt während des Einparkmanövers mittels eines Sensorsystems des Kraftfahrzeugs bestimmt wird. Die Erfindung betrifft ferner ein entsprechendes Fahrerassistenzsystem sowie ein Kraftfahrzeug mit einem solchen Fahrerassistenzsystem.

Beim assistierten Einparken eines Kraftfahrzeugs können Umfeldsensorsysteme des Kraftfahrzeugs eine geeignete Parklücke erkennen und ein Fahrerassistenzsystem kann eine optimale Trajektorie für das Kraftfahrzeug planen, um das Kraftfahrzeug in die Parklücke zu manövrieren. Während der Fahrer das Kraftfahrzeug manuell in die Parklücke steuert, kann er von dem Fahrerassistenzsystem Hinweise erhalten, sodass möglichst der optimalen Trajektorie gefolgt wird. Der Fahrer benötigt jedoch eine gewisse Zeit, bis er die Hinweise des Fahrerassistenzsystems wahrgenommen und verstanden sowie schließlich umgesetzt hat. Dies führt dazu, dass nicht in jedem Fall der optimalen Trajektorie gefolgt beziehungsweise eine optimale Parkposition oder -orientierung erreicht wird. Je höher die Fahrzeuggeschwindigkeit beim Einparkvorgang und je länger die Reaktionszeit des Fahrers, desto höher wird tendenziell die Abweichung.

Im Dokument DE 10 2004 047 484 A1 wird ein Verfahren zur Ausgabe von Einparkhinweisen beschrieben. Dabei werden Lenkanweisungen zum Einschlagen der Lenkung ausgegeben und nach einer vorgegebenen Wegstrecke nach Ausgabe der Lenkanweisung wird eine Korrekturanweisung dann ausgegeben, wenn ein vorgegebener Einschlagwinkel nicht eingestellt worden ist. Dieses Verfahren hat jedoch den Nachteil, dass die Korrekturanweisung gegebenenfalls zu spät erfolgt, als dass noch eine optimale Parkposition ohne zusätzlichen Einparkzug möglich ist. Außerdem muss der Fahrer nicht nur die Lenkanweisung, sondern auch die Korrekturanweisung umsetzen, sodass das oben skizzierte Problem nicht gelöst, sondern lediglich verlagert wird.

Im Dokument DE 10 2004 001 122 A1 wird ein Verfahren zum Bereitstellen von Informationen zum Paralleleinparken eines Fahrzeugs angegeben. Dabei soll das Einfahren in die Parklücke unabhängig von der Einfahrgeschwindigkeit und einer Reaktionszeit des Fahrers optimal ermöglicht werden. Dazu werden während des Einparkvorgangs optische oder akustische Signale an den Fahrer ausgegeben, um diesen zum Anhalten des Fahrzeugs zu bewegen. Das Signal wird dabei unter Berücksichtigung der Reaktionszeit des Fahrers und der Fahrzeuggeschwindigkeit ausgegeben, um das Fahrzeug rechtzeitig zum Anhalten zu bringen. Durch das gegebenenfalls wiederholte Anhalten des Fahrzeugs während des Einparkvorgangs wird der Komfortgrad reduziert und der Einparkvorgang dauert länger als notwendig.

Dokument DE 10 2018 215525 A1 ist als nächstliegender Stand der Technik zu sehen und beschreibt ein Assistenzsystem zum Unterstützen eines Fahrers bei einem Parkmanöver. Dabei wird anhand von Betriebsdaten eine Ideallinie zum Erreichen einer Zielposition bestimmt, eine Abweichung einer aktuellen Trajektorie von der Ideallinie bestimmt und ein Steuersignal ausgegeben, wenn eine Mindestabweichung vorliegt. Das Steuersignal kann beispielsweise als haptischer Hinweis an den Fahrer ausgegeben werden. Ein Lenkwinkel, ein Lenkradeinschlag, eine Fahrtrichtung und eine Position oder Positionsveränderung des Kraftwagens werden kontinuierlich überwacht. Die überwachten Größen werden mit berechneten Manövern oder Teilmanövern zum Erreichen der Zielposition verglichen und können extrapoliert werden, um zu bestimmen, ob der Kraftwagen die Zielposition voraussichtlich mit ausreichender Genauigkeit erreichen wird.

Dokument DE 10 2005 008875 A1 beschreibt ein Verfahren zur Unterstützung eines Fahrzeugführers bei der Ansteuerung einer Zielposition. Dabei wird über veränderliche Hilfskräfte am Lenkrad signalisiert, ob sich das Fahrzeug entlang der Solltrajektorie bewegt, wobei die zur Betätigung des Lenkrades vom Fahrzeugführer aufzubringenden Kräfte zunehmend größer werden, je weiter sich das Fahrzeug von der Solltrajektorie weg bewegt und indem die zur Betätigung des Lenkrades vom Fahrzeugführer aufzubringenden Kräfte zunehmend kleiner werden, je weiter sich das Fahrzeug auf die Solltrajektorie zu bewegt. Bei der anzusteuernden Zielposition handelt es sich dabei beispielsweise um eine Sollposition zum Einparken. Es kann vorgesehen sein, dass Abweichungen von der Solltrajektorie im Hinblick auf die Veränderung der aufzubringenden Kräfte zunehmend stärker bewertet werden, je geringer die verbleibende Wegstrecke zur Erreichung der Zielposition ist.

Vor diesem Hintergrund ist es eine Aufgabe der vorliegenden Erfindung, ein verbessertes Konzept zur Einparkassistenz für ein Kraftfahrzeug bei einem manuell gelenkten Einparkmanöver anzugeben, durch das eine Zielposition für das Kraftfahrzeug mit höherer Zuverlässigkeit beziehungsweise höherer Genauigkeit erreicht werden kann, ohne den Fahrkomfort für den Fahrer zu reduzieren.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Das verbesserte Konzept beruht auf der Idee, ein haptisches Signal als Lenkempfehlung für den Fahrer zu erzeugen, das nicht basierend auf einer aktuellen Regelabweichung, sondern auf einer prädizierten oder prognostizierten Regelabweichung erzeugt wird.

Gemäß dem verbesserten Konzept wird ein Verfahren zur Einparkassistenz für ein Kraftfahrzeug bei einem manuell gelenkten Einparkmanöver angegeben. Mittels eines Umfeldsensorsystems des Kraftfahrzeugs werden Sensordaten erzeugt, welche eine Umgebung des Kraftfahrzeugs repräsentieren. Mittels einer Recheneinheit des Kraftfahrzeugs wird wenigstens eine Referenztrajektorie für das Kraftfahrzeug, insbesondere für das Einparkmanöver, abhängig von den Sensordaten bestimmt. Mittels der Recheneinheit wird ein Istwert eines während des Einparkmanövers veränderlichen Parameters des Kraftfahrzeugs zu einem Zeitpunkt während des Einparkmanövers mittels eines Sensorsystems des Kraftfahrzeugs bestimmt. Mittels der Recheneinheit wird abhängig von der wenigstens einen Referenztrajektorie und von dem Istwert wenigstens eine prädizierte Abweichung des Parameters von einem Sollwert für den Parameter bestimmt. Abhängig von der wenigstens einen prädizierten Abweichung wird, insbesondere mittels einer Aktuatoreinheit des Kraftfahrzeugs, automatisch ein haptisches Signal als Lenkempfehlung für einen Fahrer des Kraftfahrzeugs erzeugt.

Dass es sich um ein manuell gelenktes Einparkmanöver handelt, kann insbesondere derart verstanden werden, dass keine vollautomatische Quersteuerung beim Einparken erfolgt. Insbesondere muss der Fahrer des Kraftfahrzeugs jedenfalls Lenkeingriffe selbst durchführen oder teilweise selbst durchführen, um das Kraftfahrzeug entsprechend dem Einparkmanöver einzuparken. Die Längssteuerung des Kraftfahrzeugs kann dabei vollständig manuell oder teilweise automatisch oder vollständig automatisch erfolgen.

Bei einer Referenztrajektorie muss es sich vorliegend nicht notwendigerweise um eine Solltrajektorie für das Kraftfahrzeug handeln, also eine Trajektorie, welche ein optimales Führen des Kraftfahrzeugs zum Einparken widerspiegelt. Die wenigstens eine Referenztrajektorie kann eine solche Solltrajektorie beinhalten. Die wenigstens eine Referenztrajektorie kann jedoch auch alternativ oder zusätzlich eine andere Trajektorie beinhalten, die sich zum Abgleich des Istwerts eignet. Dabei kann es sich beispielsweise um eine in geeigneter Weise modifizierte Solltrajektorie handeln.

Das Umfeldsensorsystem kann insbesondere ein Ultraschallsensorsystem, eine oder mehrere Kameras, eine oder mehrere Radarsysteme und/oder eines oder mehrere Lidarsysteme beinhalten.

Bei dem während des Einparkmanövers veränderlichen Parameter kann es sich insbesondere um einen Parameter handeln, der eine Bewegung des Kraftfahrzeugs während des Einparkmanövers direkt oder indirekt betrifft. Der Parameter kann beispielsweise einer Position des Kraftfahrzeugs, einer Orientierung des Kraftfahrzeugs, einem Lenkwinkel des Kraftfahrzeugs oder einer Krümmung der von dem Kraftfahrzeug gefahrenen Trajektorie handeln. Es ist auch möglich, mehrere verschiedene Messwerte zum Bestimmen des Parameters miteinander zu kombinieren oder zu verarbeiten.

Unter einer prädizierten Abweichung des Parameters kann insbesondere eine geschätzte oder prognostizierte Abweichung des Parameters von dem Sollwert zu einem Zeitpunkt handeln, der nach dem Zeitpunkt liegt, zu dem der Istwert bestimmt wird. Dazu kann beispielsweise der Parameter entsprechend einer prädizierten Trajektorie für das Kraftfahrzeug prädiziert werden und der prädizierte Wert mit dem Sollwert verglichen werden. Es sind aber auch andere Möglichkeiten zur Prädiktion möglich, die gegebenenfalls auch ohne eine prädizierte Trajektorie für das Kraftfahrzeug auskommen. Beispielsweise kann eine Solltrajektorie modifiziert werden, indem beispielsweise virtuell die Zielposition verschoben wird, und der Istwert mit einem entsprechenden Wert für den Parameter gemäß der modifizierten Solltrajektorie verglichen wird.

Das Bestimmen der wenigstens einen prädizierten Abweichung kann beispielsweise auch unter Zugrundelegung von Annahmen über das voraussichtliche Verhalten des Fahrers erfolgen. Beispielsweise kann angenommen werden, dass der Fahrer beim Paralleleinparken des Kraftfahrzeugs während des Einparkmanövers ein Umlenken vornimmt. Beim Quer- oder Schrägeinparken kann beispielsweise davon ausgegangen werden, dass der Fahrer während des Einparkmanövers zu einem bestimmten Zeitpunkt einen Lenkwinkel von näherungsweise Null Grad einstellt. Dadurch lässt sich die wenigstens eine prädizierte Abweichung mit höherer Zuverlässigkeit bestimmen.

Dadurch, dass zum Erzeugen des haptischen Signals die wenigstens eine prädizierte Abweichung zugrundegelegt wird und nicht etwa eine aktuelle Regelabweichung des Istwerts, wird dem Umstand Rechnung getragen, dass von der Ausgabe des haptischen Signals bis zur Umsetzung der Lenkempfehlung durch den Fahrer typischerweise eine gewisse Zeit vergeht, während der sich das Kraftfahrzeug weiterbewegt. Dies geht auf die Reaktionszeit des Fahrers zurück und auf die Zeit, welche der Fahrer zum Umsetzen der Lenkempfehlung benötigt. Durch die Verwendung der prädizierten Abweichung wird die Lenkempfehlung in Form des haptischen Signals bereits zu einem vorgezogenen Zeitpunkt ausgegeben, zu dem die Umsetzung der Lenkempfehlung noch nicht sofort erforderlich ist. Durch die genannte Verzögerung wird dieser Zeitunterschied jedoch kompensiert, sodass die Lenkempfehlung tatsächlich zu einem optimalen Zeitpunkt umgesetzt werden kann. Dadurch wird das Ergebnis des Einparkmanövers, also das zuverlässige Erreichen der Zielposition, verbessert. Durch die gewissermaßen präventive Ausgabe der Lenkempfehlung ist auch die Wahrscheinlichkeit höher, dass der Fahrer der optimalen Trajektorie mehr oder weniger genau folgt. Dadurch sind gegebenenfalls weniger häufig oder weniger intensive haptische Signale erforderlich, was den Komfortgrad für den Fahrer ebenfalls erhöht.

Das haptische Signal kann dabei über ein Lenksystem des Kraftfahrzeugs, insbesondere durch ein in das Lenksystem eingeprägtes Lenkmoment, oder über einen haptischen Aktuator, beispielsweise zum Erzeugen einer Vibration als haptisches Signal am Lenkrad oder im Fahrersitz des Kraftfahrzeugs, erzeugt werden.

Gemäß zumindest einer Ausführungsform wird eine Fahrzeuggeschwindigkeit des Kraftfahrzeugs wenigstens näherungsweise zu dem Zeitpunkt bestimmt, zu dem der Istwert bestimmt wird. Die wenigstens eine prädizierte Abweichung wird abhängig von der Fahrzeuggeschwindigkeit bestimmt.

Die Fahrzeuggeschwindigkeit kann beispielsweise mittels eines Geschwindigkeitssensors des Kraftfahrzeugs oder einer Radposition zusammen mit einem Randumfangswert bestimmt werden.

Dadurch kann berücksichtigt werden, dass die Abweichung der tatsächlichen Trajektorie von der Solltrajektorie beziehungsweise der tatsächlich erreichten Endposition des Kraftfahrzeugs von der Zielposition umso größer ist, je größer die Fahrzeuggeschwindigkeit ist. Dementsprechend kann so das Ergebnis des Einparkmanövers weiter verbessert werden. Gemäß zumindest einer Ausführungsform wird zum Erzeugen des haptischen Signals, insbesondere mittels einer Aktuatoreinheit des Kraftfahrzeugs, ein Zusatzlenkmoment in einem Lenksystem des Kraftfahrzeugs erzeugt.

Die Aktuatoreinheit kann dabei an einer beliebigen Stelle in dem Lenksystem eingreifen, um das Zusatzlenkmoment zu erzeugen. Das Zusatzlenkmoment ist dann am Lenkrad für den Fahrer als haptisches Signal spürbar. Die Richtung des Zusatzlenkmoments ist insbesondere derart gewählt, dass sie einer Verringerung der wenigstens einen prädizierten Abweichung entspricht, wenn der Fahrer der Lenkempfehlung entsprechend dem haptischen Signal folgt. Das Zusatzlenkmoment kann dabei als Lenkmoment zusätzlich zu dem durch den Fahrer zum Lenken des Kraftfahrzeugs eingestellten Lenkmoment verstanden werden. Dementsprechend kann, wenn der Fahrer selbst kein Lenkmoment einprägt, das Zusatzlenkmoment auch das einzige von Null verschiedene Lenkmoment in dem Lenksystem sein. Der Betrag des Zusatzlenkmoments kann dabei, insbesondere abhängig von einem möglicherweise gegebenen Rückstellmoment, oberhalb oder unterhalb einer Schwelle zu einem aktiven Lenkeingriff sein. Jedenfalls ist das Zusatzlenkmoment nicht notwendigerweise ausreichend, um das Kraftfahrzeug vollautomatisch querzusteuern.

Durch die Verwendung eines Zusatzlenkmoments als haptisches Signal kann eine besonders intuitive Lenkempfehlung an den Fahrer ausgegeben werden. Insbesondere kann das Lenkmoment auch kontinuierlich ausgegeben werden, ohne dass der Fahrer dadurch von der manuellen Lenkaufgabe abgelenkt wird. Dadurch kann die Zuverlässigkeit des Einparkmanövers beziehungsweise der Einparkassistenz weiter erhöht werden.

Erfindungsgemäß wird, insbesondere mittels der Recheneinheit abhängig von den Sensordaten, die Solltrajektorie für das Kraftfahrzeug als erste Referenztrajektorie der wenigstens einen Referenztrajektorien bestimmt, wobei die Solltrajektorie die Zielposition des Einparkmanövers für das Kraftfahrzeug enthält.

Die Solltrajektorie entspricht insbesondere einer optimalen Trajektorie, um das Kraftfahrzeug von einer Startposition in die Zielposition zu bewegen. Insbesondere verbindet die Solltrajektorie eine tatsächliche Position des Kraftfahrzeugs zu einem Anfangs- oder Startzeitpunkt des Einparkmanövers mit der Zielposition.

Die Bestimmung der Solltrajektorie ist in zuverlässiger Weise möglich, sodass solche Ausführungsformen zu einem zuverlässigen Ergebnis des Einparkmanövers führen.

Gemäß zumindest einer Ausführungsform wird, insbesondere mittels der Recheneinheit, eine Trajektorie des Kraftfahrzeugs abhängig von dem Istwert prädiziert. Mittels der Recheneinheit wird eine Abweichung des Parameters gemäß der Solltrajektorie von dem Parameter gemäß der prädizierten Trajektorie als erste prädizierte Abweichung der wenigstens einen prädizierten Abweichung bestimmt.

Insbesondere kann die Prädiktion der prädizierten Trajektorie abhängig von dem Istwert und von weiteren historischen Istwerten, also vor dem Zeitpunkt der Bestimmung des Istwerts bestimmten Istwerten, erfolgen.

Zum Bestimmen der Abweichung wird also insbesondere ein Punkt auf der Solltrajektorie mit einem Punkt auf der prädizierten Trajektorie verglichen, insbesondere hinsichtlich des Parameters. Es wird also prognostiziert, an welcher Stelle der prädizierten Trajektorie sich das Kraftfahrzeug zu einem bestimmten Zeitpunkt voraussichtlich befindet und auf welchem Punkt gemäß der Solltrajektorie sich das Kraftfahrzeug zu diesem Zeitpunkt befinden sollte. Der Parameter entsprechend dieser beiden Positionen der Solltrajektorie beziehungsweise der prädizierten Trajektorie wird miteinander verglichen.

Dadurch wird ein Zeitversatz zum Erzeugen des haptischen Signals eingeführt, welcher dem Fahrer ausreichend Zeit gibt, auf die Lenkempfehlung durch das haptische Signal zu reagieren. Gemäß zumindest einer Ausführungsform wird das haptische Signal abhängig von der ersten prädizierten Abweichung erzeugt.

Erfindungsgemäß wird, insbesondere mittels der Recheneinheit abhängig von den Sensordaten, eine modifizierte Solltrajektorie für das Kraftfahrzeug als zweite Referenztrajektorie der wenigstens einen Referenztrajektorie bestimmt, wobei die modifizierte Solltrajektorie eine bezüglich der Zielposition der Solltrajektorie modifizierte Zielposition für das Kraftfahrzeug enthält. Die modifizierte Zielposition ist dabei insbesondere abhängig von dem Istwert des Parameters oder von einer prädizierten Zielposition gemäß der prädizierten Trajektorie.

Die modifizierte Solltrajektorie kann also als verschobene Version oder Variante der Solltrajektorie aufgefasst werden. Beispielsweise kann die modifizierte Solltrajektorie einer Solltrajektorie für die modifizierte Zielposition für das Kraftfahrzeug entsprechen. Mit anderen Worten wird die Zielposition modifiziert, sodass sich eine virtuelle Solltrajektorie ergibt, der das Kraftfahrzeug optimalerweise folgen sollte, wenn es zu der modifizierten Zielposition geführt werden sollte. Die modifizierte Zielposition ist dabei jedoch nicht die tatsächliche Zielposition. Dadurch kann effektiv ebenfalls ein Zeitversatz eingeführt werden, sodass auch hier die Regelabweichung des Istwerts zum Erzeugen des haptischen Signals durch eine prädizierte oder prognostizierte Regelabweichung ersetzt wird. Das Modifizieren der Zielposition beziehungsweise der Solltrajektorie kann also als Prädizieren aufgefasst werden. Die Modifikation der Zielposition beziehungsweise der Solltrajektorie erfolgt dabei insbesondere derart, dass eine bestimmungsgemäße Reaktion des Fahrers auf das entsprechende haptische Signal die Modifikation entsprechend wenigstens zum Teil kompensiert.

Durch Modifikation der Solltrajektorie beziehungsweise der Zielposition kann auch einem Rückstellmoment des Lenksystems Rechnung getragen werden, das sich beispielsweise einstellen kann, wenn der Fahrer im Stillstand des Kraftfahrzeugs lenkt.

Gemäß zumindest einer Ausführungsform wird, insbesondere mittels der Recheneinheit, eine Abweichung des Parameters gemäß der modifizierten Solltrajektorie von dem Istwert als zweite prädizierte Abweichung der wenigstens einen prädizierten Abweichung bestimmt.

Gemäß zumindest einer Ausführungsform wird das haptische Signal abhängig von der zweiten prädizierten Abweichung erzeugt.

Gemäß zumindest einer Ausführungsform wird eine Abweichung des Parameters gemäß der modifizierten Solltrajektorie von dem Parameter gemäß der prädizierten Trajektorie als weitere prädizierte Abweichung der wenigstens einen prädizierten Abweichung bestimmt.

Gemäß zumindest einer Ausführungsform wird das haptische Signal abhängig von der weiteren prädizierten Abweichung erzeugt.

In solchen Ausführungsformen kann also die Modifikation der Solltrajektorie beziehungsweise der Zielposition mit der Prädiktion der Trajektorie des Kraftfahrzeugs korreliert werden, um zuverlässigere Ergebnisse zu erzielen.

Gemäß zumindest einer Ausführungsform wird, insbesondere mittels der Recheneinheit, abhängig von dem Istwert ein modifizierter Istwert bestimmt und eine Abweichung des Parameters gemäß der Solltrajektorie von dem modifizierten Istwert wird als dritte prädizierte Abweichung der wenigstens einen prädizierten Abweichung bestimmt.

Analog zur Verschiebung der Zielposition oder zur Modifikation der Zielposition zum Erzeugen der modifizierten Solltrajektorie, wie oben beschrieben, kann auch der Istwert beziehungsweise die prädizierte Trajektorie entsprechend entgegengesetzt modifiziert werden.

Gemäß zumindest einer Ausführungsform wird das haptische Signal abhängig von der dritten prädizierten Abweichung erzeugt.

Gemäß zumindest einer Ausführungsform wird das haptische Signal nur dann erzeugt, wenn eine der wenigstens einen prädizierten Abweichungen größer oder gleich einer vorgegebenen Mindestabweichung ist.

Mit anderen Worten wird das haptische Signal nicht erzeugt, wenn keine der prädizierten Abweichungen größer oder gleich der Mindestabweichung ist. Dadurch wird also mit anderen Worten ein Totbereich eingeführt, innerhalb dessen Abweichungen nicht zu einer Lenkempfehlung führen, weil die entsprechenden Abweichungen im Rahmen des Einparkmanövers zu akzeptablen Abweichungen von der Zielposition führen. Dadurch wird der Grad an Komfort für den Fahrer weiter erhöht, ohne die Zuverlässigkeit des gesamten Einparkvorgangs zu reduzieren.

Gemäß dem verbesserten Konzept wird auch ein Fahrerassistenzsystem für ein Kraftfahrzeug zur Einparkassistenz bei einem manuell gelenkten Einparkmanöver angegeben. Das Fahrerassistenzsystem weist ein Umfeldsensorsystem auf, das dazu eingerichtet ist, Sensordaten zu erzeugen, welche eine Umgebung des Kraftfahrzeugs repräsentieren. Das Fahrerassistenzsystem weist eine Recheneinheit auf, die dazu eingerichtet ist, wenigstens eine Referenztrajektorie für das Kraftfahrzeug abhängig von den Sensordaten zu bestimmen. Das Fahrerassistenzsystem weist ein Sensorsystem auf, das dazu eingerichtet ist, einen Istwert eines während des Einparkmanövers veränderlichen Parameters des Kraftfahrzeugs zu einem Zeitpunkt während des Einparkmanövers zu bestimmen. Die Recheneinheit ist dazu eingerichtet, abhängig von der wenigstens einen Referenztrajektorie und von dem Istwert wenigstens eine prädizierte Abweichung des Parameters von einem Sollwert zu bestimmen. Das Fahrerassistenzsystem weist eine Aktuatoreinheit auf, die dazu eingerichtet ist, abhängig von der wenigstens einen prädizierten Abweichung, insbesondere angesteuert durch die Recheneinheit, automatisch ein haptisches Signal als Lenkempfehlung für einen Fahrer des Kraftfahrzeugs zu erzeugen.

Weitere Ausführungsformen des Fahrerassistenzsystems nach dem verbesserten Konzept folgen direkt aus den verschiedenen Ausgestaltungsformen des Verfahrens nach dem verbesserten Konzept und umgekehrt. Insbesondere kann ein Fahrerassistenzsystem nach dem verbesserten Konzept dazu eingerichtet oder programmiert sein, ein Verfahren nach dem verbesserten Konzept durchzuführen oder es führt ein solches Verfahren durch.

Gemäß dem verbesserten Konzept wird auch ein Kraftfahrzeug mit einem Fahrerassistenzsystem nach dem verbesserten Konzept angegeben.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Kraftfahrzeugs hier nicht noch einmal beschrieben.

Die Erfindung umfasst auch die Kombinationen der Merkmale der beschriebenen Ausführungsformen.

Im Folgenden sind Ausführungsbeispiele der Erfindung beschrieben. In den Figuren zeigen:
- Fig. 1: eine schematische Darstellung eines Kraftfahrzeugs mit einer beispielhaften Ausführungsform eines Fahrerassistenzsystems nach dem verbesserten Konzept;
- Fig. 2: verschiedene Situationen beim assistierten Einparken eines Kraftfahrzeugs;
- Fig. 3: verschiedene Regelungscharakteristika zum Erzeugen einer Lenkempfehlung gemäß beispielhafter Ausführungsformen eines Verfahrens nach dem verbesserten Konzept; und
- Fig. 4: weitere beispielhafte Situationen beim assistierten Einparken eines Kraftfahrzeugs.

Bei den im Folgenden erläuterten Ausführungsbeispielen handelt es sich um bevorzugte Ausführungsformen der Erfindung.

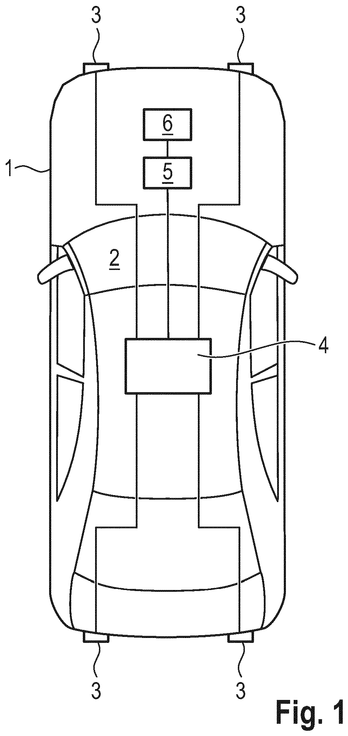

In den Figuren sind funktionsgleiche Elemente jeweils mit denselben Bezugszeichen versehen. In Fig. 1 ist schematisch ein Kraftfahrzeug 1 mit einer beispielhaften Ausführungsform eines Fahrerassistenzsystems 2 nach dem verbesserten Konzept dargestellt. Das Fahrerassistenzsystem 2 weist ein Umfeldsensorsystem 3 auf, das beispielsweise eines oder mehrere Ultraschallsensorsysteme beinhalten kann. Das Fahrerassistenzsystem 2 weist außerdem eine mit dem Umfeldsensorsystem 3 verbundene Recheneinheit 4 auf, die beispielsweise Teil eines elektronischen Steuergeräts des Kraftfahrzeugs 1 sein kann oder ein solches enthalten kann. Außerdem weist das Fahrerassistenzsystem 2 ein Sensorsystem 5 auf, das einen während der Fahrt, insbesondere während eines Einparkmanövers, veränderlichen Parameter des Kraftfahrzeugs 1 bestimmen kann. Der Parameter kann beispielsweise einer Position oder Orientierung des Kraftfahrzeugs 1, einer Trajektorienkrümmung oder einem Lenkwinkel des Kraftfahrzeugs 1 entsprechen. Dementsprechend kann das Sensorsystem 5 beispielsweise einen Lenkwinkelsensor und/oder einen oder mehrere Sensoren zur, beispielsweise odometrischen, Bestimmung der Position oder Orientierung des Kraftfahrzeugs 1 beinhalten, beispielsweise einen oder mehrere Raddrehzahlsensoren, Geschwindigkeitssensoren und/oder Beschleunigungs-sensoren und so weiter. Das Sensorsystem 5 kann auch einen Empfänger für ein globales Navigationssatellitensystem, GNSS, beispielsweise einen GPS-Empfänger, beinhalten.

Außerdem weist das Fahrerassistenzsystem 2 eine Aktuatoreinheit 6 auf, die ein haptisches Signal an einen Fahrer des Kraftfahrzeugs 1 ausgeben kann. Die Aktuatoreinheit 6 kann beispielsweise in oder an einem Lenksystem des Kraftfahrzeugs 1 angeordnet sein, um ein Zusatzlenkmoment als haptisches Signal, das beispielsweise an einem Lenkrad des Kraftfahrzeugs 1 für den Fahrer spürbar ist, zu erzeugen.

Das Fahrerassistenzsystem 2 kann den Fahrer beim manuellen Einparken des Kraftfahrzeugs 1 in eine Parklücke assistieren. Fährt der Fahrer beispielsweise an einer Parklücke vorbei, so kann die Parklücke beispielsweise anhand des Umfeldsensorsystems 3 erkannt und gegebenenfalls charakterisiert werden. Der Fahrer kann beispielsweise das Kraftfahrzeug 1 anhalten und den Rückwärtsgang einlegen, um rückwärts quer oder rückwärts parallel in die entsprechende Lücke einzuparken.

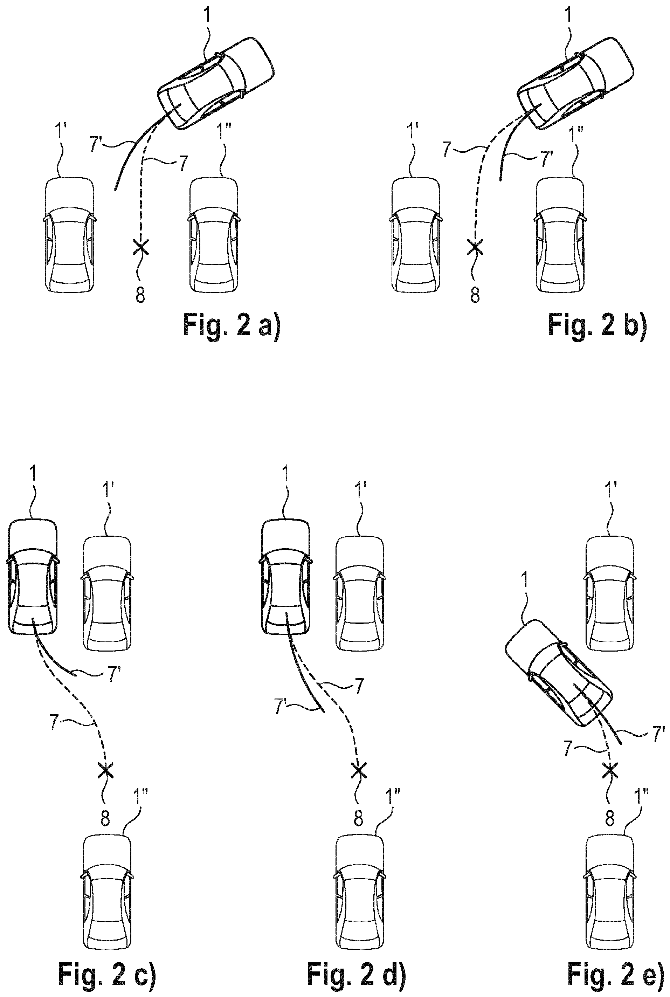

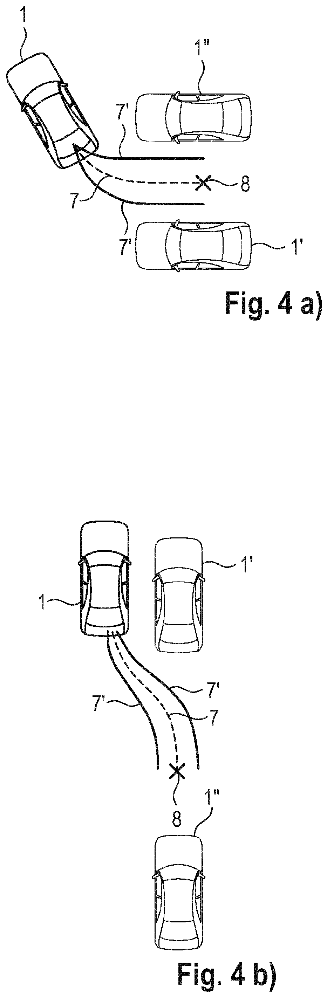

Die Recheneinheit 4 bestimmt basierend auf von dem Umfeldsensorsystem 3 erzeugten Sensordaten eine Referenztrajektorie. In verschiedenen Ausführungsformen kann es sich bei der Referenztrajektorie um eine Solltrajektorie 7 für das Kraftfahrzeug 1 handeln, um das Kraftfahrzeug 1 in möglichst optimaler Weise zu einer Zielposition 8 zu führen (siehe Fig. 2 und Fig. 4).

Das Sensorsystem 5 ist beispielsweise dazu eingerichtet, einen Istwert des veränderlichen Parameters während des Einparkmanövers kontinuierlich oder wiederholt zu bestimmen. Die Recheneinheit 4 kann abhängig von der Referenztrajektorie und von dem Istwert eine Abweichung des Parameters von einem Sollwert prädizieren. Je nach prädizierter Abweichung kann die Aktuatoreinheit 6 dann das haptische Signal als Lenkempfehlung für den Fahrer erzeugen.

Handelt es sich bei der Referenztrajektorie um die Solltrajektorie 7, so kann die Recheneinheit 4 beispielsweise eine prädizierte Trajektorie 7' für das Kraftfahrzeug 1 basierend auf dem Istwert des Parameters und gegebenenfalls basierend auf weiteren historischen Istwerten des Parameters bestimmen, wie es in den Abbildungen der Fig. 2 schematisch dargestellt ist. Die prädizierte Abweichung entspricht dann beispielsweise einer Abweichung der Position oder Trajektorienkrümmung zu einem späteren Zeitpunkt zwischen der Solltrajektorie 7 und der prädizierten Trajektorie 7'.

Dementsprechend wird das haptische Signal zur Lenkempfehlung nicht basierend auf einer aktuellen, sondern basierend auf einer prädizierten Regelabweichung von dem Sollwert erzeugt.

In den Abbildungen a) bis e) der Fig. 2 sind verschiedene Situationen dargestellt, bei denen das Kraftfahrzeug 1 in eine Parklücke zwischen zwei weiteren Kraftfahrzeugen 1', 1" zu einer Zielposition 8 geführt werden soll. Die Abbildungen a) und b) zeigen dabei ein Einparkmanöver zum rückwärts quer Einparken und die Abbildungen c) bis e) zeigen ein Parkmanöver zum rückwärts parallel Einparken zwischen den weiteren Kraftfahrzeugen 1', 1".

Die prädizierten Trajektorien 7' entsprechen dabei verschiedenen Abweichungen des Fahrerverhaltens vom optimalen Verhalten, um der Solltrajektorie 7 zu folgen. In der Situation der Abbildung a) schlägt der Fahrer des Kraftfahrzeugs 1 die Lenkung zu wenig oder zu spät ein, während der Fahrer in der Situation der Abbildung b) zu früh oder zu stark einschlägt. Entsprechend erzeugt die Aktuatoreinheit 6 in der Situation der Abbildung a) ein Lenkmoment nach rechts und in der Situation der Abbildung b) ein Lenkmoment nach links, um den Fahrer zum stärkeren beziehungsweise weniger starken Einschlagen zu veranlassen.

In der Situation der Abbildung c) schlägt der Fahrer des Kraftfahrzeugs 1 ebenfalls zu früh ein oder zu stark, in der Situation der Abbildung d) schlägt der Fahrer zu spät oder zu wenig stark ein und in der Situation der Abbildung e) lenkt der Fahrer zu früh oder lenkt zu spät zurück.

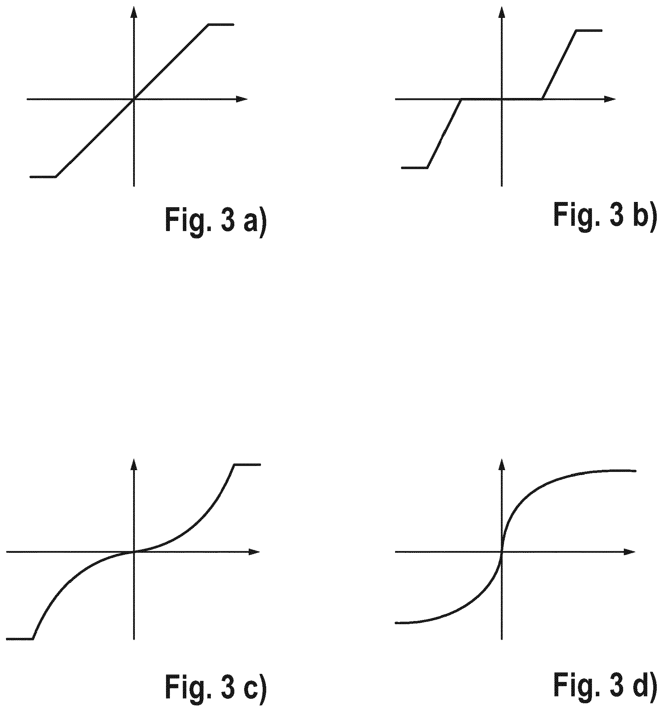

In den Abbildungen a) bis d) der Fig. 3 sind verschiedene Strategien zur Regelung des Parameters schematisch dargestellt. Auf der horizontalen Achse ist dabei die prädizierte Abweichung aufgetragen und auf der vertikalen Achse eine Stärke des haptischen Signals, insbesondere des Zusatzlenkmoments. Beispielsweise kann das Zusatzlenkmoment durch ein minimales oder maximales Zusatzlenkmoment begrenzt sein, wie in den einzelnen Abbildungen der Fig. 3 dargestellt.

In der Abbildung a) verläuft die Stärke des Zusatzlenkmoments zwischen maximalem und minimalem Zusatzlenkmoment linear. In Abbildung b) ist zusätzlich ein Totbereich bei kleinen prädizierten Abweichungen vorgesehen, in dem kein Zusatzlenkmoment erzeugt wird. Außerhalb des Totbereichs ist der Zusammenhang auch hier beispielsweise linear. In den Abbildungen c) und d) sind schematisch supralineare beziehungsweise superlineare Zusammenhänge zwischen prädizierter Abweichung und Zusatzlenkmoment dargestellt.

In Fig. 4 sind weitere Situationen beim Einparken des Kraftfahrzeugs 1 schematisch dargestellt. In Abbildung a) ist dabei ein Vorgang zum quer Einparken und in Abbildung b) ein Vorgang zum parallel Einparken dargestellt. Neben der jeweiligen Solltrajektorie 7 sind jeweils zwei prädizierte Trajektorien 7' dargestellt, bei denen zu früh und/oder zu stark beziehungsweise zu spät und/oder zu schwach eingelenkt wurde. Dadurch resultiert eine entsprechende Abweichung in der Zielposition 8, wie durch Pfeile angedeutet.

Gemäß dem verbesserten Konzept kann also das manuelle Lenkmanöver mit höherer Zuverlässigkeit und mit verbessertem subjektivem Lenkempfinden für den Fahrer durchgeführt werden. Der Fahrer kann dadurch insbesondere derart geführt werden, dass sowohl der Zeitpunkt als auch die Stärke seiner Lenkaktionen zu einer möglichst optimalen Trajektorie und damit zu einer möglichst optimalen Parkposition und Parkorientierung führen.

Der Fahrer soll der optimalen Trajektorie möglichst genau folgen. Dazu benötigt er eine gewisse Zeit, bis die Lenkempfehlung wahrgenommen und verstanden wurde, sowie bis die gewünschte Reaktion ausgeführt wird. Um das Erreichen der optimalen Parkposition zu gewährleisten, kann nach dem verbesserten Konzept durch die Prädiktion der Abweichung auch die Reaktionszeit des Fahrers berücksichtigt werden. Dadurch kann die Lenkempfehlung zeitlich bereits abgegeben werden, bevor diese umgesetzt werden sollte. Der Zeitpunkt der Abgabe der Lenkempfehlung kann außerdem abhängig von der Fahrzeuggeschwindigkeit ausgestaltet sein.

Nach dem verbesserten Konzept wird die Lenkempfehlung also nicht abhängig von einer tatsächlichen Regelabweichung bestimmt, sondern abhängig von einer prognostizierten Regelabweichung, die beispielsweise zwischen Soll- und Istwerten von Lenkwinkel, Kraftfahrzeugposition, Kraftfahrzeugorientierung und so weiter bestimmt werden kann. In verschiedenen Ausführungen kann auch, unabhängig von der prädizierten Trajektorie, ein fester Wert für den zeitlichen und/oder örtlichen Versatz der Zielposition vorgegeben werden.

In verschiedenen Ausführungsformen kann bei einer Abweichung von der Solltrajektorie unabhängig von der Größe der Abweichung ein Mindestmoment aufgeprägt werden, das spürbar ist, um insbesondere auch ein Rückstellmoment zu nutzen beziehungsweise zu kompensieren. In verschiedenen Ausgestaltungsformen kann abhängig davon, ob der Fahrer bereits im Stand eingelenkt hat, die Zielposition dynamisch verschoben werden, um die Abweichung zu korrigieren.

### Bezugszeichenliste

- 1, 1', 1": Kraftfahrzeuge
- 2: Fahrerassistenzsystem
- 3: Umfeldsensorsystem
- 4: Recheneinheit
- 5: Sensorsystem
- 6: Aktuatoreinheit
- 7, 7': Trajektorien
- 8: Zielposition

## Patentansprüche

1. Verfahren zur Einparkassistenz für ein Kraftfahrzeug (1) bei einem manuell gelenktem Einparkmanöver, wobei
- mittels eines Umfeldsensorsystems (3) des Kraftfahrzeugs (1) Sensordaten erzeugt werden, welche eine Umgebung des Kraftfahrzeugs (1) repräsentieren;
- mittels einer Recheneinheit (4) des Kraftfahrzeugs (1) wenigstens eine Referenztrajektorie (7) für das Kraftfahrzeug (1) abhängig von den Sensordaten bestimmt wird;
- mittels der Recheneinheit (4) ein Istwert eines während des Einparkmanövers veränderlichen Parameters des Kraftfahrzeugs (1) zu einem Zeitpunkt während des Einparkmanövers mittels eines Sensorsystems (5) des Kraftfahrzeug (1) bestimmt wird;
- mittels der Recheneinheit (4) abhängig von der wenigstens einen Referenztrajektorie (7) und von dem Istwert wenigstens eine prädizierte Abweichung des Parameters von einem Sollwert bestimmt wird;
- abhängig von der wenigstens einen prädizierten Abweichung automatisch ein haptisches Signal als Lenkempfehlung für einen Fahrer des Kraftfahrzeugs (1) erzeugt wird;
- eine Solltrajektorie (7) für das Kraftfahrzeug (1) als erste Referenztrajektorie (7) der wenigstens einen Referenztrajektorie (7) bestimmt wird, wobei die Solltrajektorie (7) eine Zielposition (8) des Einparkmanövers für das Kraftfahrzeug (1) enthält
- eine modifizierte Solltrajektorie für das Kraftfahrzeug (1) als zweite Referenztrajektorie der wenigstens einen Referenztrajektorie bestimmt wird; und
- die modifizierte Solltrajektorie eine bezüglich der Zielposition (8) modifizierte Zielposition für das Kraftfahrzeug (1) enthält.

2. Verfahren nach Anspruch 1,
**dadurch gekennzeichnet, dass**
zum Erzeugen des haptischen Signals ein Zusatzlenkmoment in einem Lenksystem des Kraftfahrzeugs (1) erzeugt wird.

3. Verfahren nach einem der vorhergehenden Ansprüche,
**dadurch gekennzeichnet, dass**
- eine Trajektorie des Kraftfahrzeugs (1) abhängig von dem Istwert prädiziert wird; und
- eine Abweichung des Parameters gemäß der Solltrajektorie (7) von dem Parameter gemäß der prädizierten Trajektorie als erste prädizierte Abweichung der wenigstens einen prädizierten Abweichung bestimmt wird.

4. Verfahren nach einem der vorhergehenden Ansprüche,
**dadurch gekennzeichnet, dass**
eine Abweichung des Parameters gemäß der modifizierten Solltrajektorie von dem Istwert als zweite prädizierte Abweichung der wenigstens einen prädizierten Abweichung bestimmt wird.

5. Verfahren nach einem der vorhergehenden Ansprüche,
**dadurch gekennzeichnet, dass**
- abhängig von dem Istwert ein modifizierter Istwert bestimmt wird; und
- eine Abweichung des Parameters gemäß der Solltrajektorie (8) von dem modifizierten Istwert als weitere prädizierte Abweichung der wenigstens einen prädizierten Abweichung bestimmt wird.

6. Verfahren nach einem der vorhergehenden Ansprüche,
**dadurch gekennzeichnet, dass**
das haptische Signal nur dann erzeugt wird, wenn eine der wenigstens einen prädizierten Abweichungen größer oder gleich einer vorgegebenen Mindestabweichung ist.

7. Fahrerassistenzsystem für ein Kraftfahrzeug (1) zur Einparkassistenz bei einem manuell gelenktem Einparkmanöver, wobei
- das Fahrerassistenzsystem (2) ein Umfeldsensorsystem (3) aufweist, das dazu eingerichtet ist, Sensordaten zu erzeugen, welche eine Umgebung des Kraftfahrzeugs (1) repräsentieren;
- das Fahrerassistenzsystem (2) eine Recheneinheit (4) aufweist, die dazu eingerichtet ist, wenigstens eine Referenztrajektorie (7) für das Kraftfahrzeug (1) abhängig von den Sensordaten zu bestimmen, wobei die Recheneinheit (4) dazu eingerichtet ist, eine Solltrajektorie (7) für das Kraftfahrzeug (1) als erste Referenztrajektorie (7) der wenigstens einen Referenztrajektorie (7) zu bestimmen, wobei die Solltrajektorie (7) eine Zielposition (8) des Einparkmanövers für das Kraftfahrzeug (1) enthält, und eine modifizierte Solltrajektorie für das Kraftfahrzeug (1) als zweite Referenztrajektorie der wenigstens einen Referenztrajektorie zu bestimmen, wobei die modifizierte Solltrajektorie eine bezüglich der Zielposition (8) modifizierte Zielposition für das Kraftfahrzeug (1) enthält; und
- das Fahrerassistenzsystem (2) ein Sensorsystem (5) aufweist, das dazu eingerichtet ist, einen Istwert eines während des Einparkmanövers veränderlichen Parameters des Kraftfahrzeugs (1) zu einem Zeitpunkt während des Einparkmanövers zu bestimmen;
- die Recheneinheit (4) dazu eingerichtet ist, abhängig von der wenigstens einen Referenztrajektorie (7) und von dem Istwert wenigstens eine prädizierte Abweichung des Parameters von einem Sollwert zu bestimmen; und
- das Fahrerassistenzsystem (2) eine Aktuatoreinheit (6) aufweist, die dazu eingerichtet ist, abhängig von der wenigstens einen prädizierten Abweichung automatisch ein haptisches Signal als Lenkempfehlung für einen Fahrer des Kraftfahrzeugs (1) zu erzeugen.

8. Kraftfahrzeug mit einem Fahrerassistenzsystem (2) nach Anspruch 7.

## Claims

1. Method for parking assistance for a motor vehicle (1) during a manually steered parking maneuver, wherein
- by means of a surroundings sensor system (3) of the motor vehicle (1), sensor data are generated which represent a surroundings of the motor vehicle (1);
- by means of a computing unit (4) of the motor vehicle (1), at least one reference trajectory (7) for the motor vehicle (1) is determined on the basis of the sensor data;
- by means of the computing unit (4), an actual value of a parameter of the motor vehicle (1) which is variable during the parking maneuver is determined at a time point during the parking maneuver by means of a sensor system (5) of the motor vehicle (1);
- by means of the computing unit (4), at least one predicted deviation of the parameter from a target value is determined on the basis of the at least one reference trajectory (7) and the actual value;
- on the basis of the at least one predicted deviation, a haptic signal is automatically generated as a steering recommendation for a driver of the motor vehicle (1);
- a target trajectory (7) for the motor vehicle (1) is determined as a first reference trajectory (7) of the at least one reference trajectory (7), wherein the target trajectory (7) contains a target position (8) of the parking maneuver for the motor vehicle (1)
- a modified target trajectory for the motor vehicle (1) is determined as a second reference trajectory of the at least one reference trajectory; and
- the modified target trajectory contains a target position for the motor vehicle (1) which is modified with respect to the target position (8).

2. Method according to claim 1,
**characterized in that,**
in order to generate the haptic signal, an additional steering torque is generated in a steering system of the motor vehicle (1).

3. Method according to either of the preceding claims,
**characterized in that**
- a trajectory of the motor vehicle (1) is predicted on the basis of the actual value; and
- a deviation of the parameter according to the target trajectory (7) from the parameter according to the predicted trajectory is determined as a first predicted deviation of the at least one predicted deviation.

4. Method according to any of the preceding claims,
**characterized in that**
a deviation of the parameter according to the modified target trajectory from the actual value is determined as a second predicted deviation of the at least one predicted deviation.

5. Method according to any of the preceding claims,
**characterized in that**
- a modified actual value is determined on the basis of the actual value; and
- a deviation of the parameter according to the target trajectory (8) from the modified actual value is determined as a further predicted deviation of the at least one predicted deviation.

6. Method according to any of the preceding claims,
**characterized in that**
the haptic signal is only generated if one of the at least one predicted deviations is greater than or equal to a predefined minimum deviation.

7. Driver assistance system for a motor vehicle (1) for parking assistance during a manually steered parking maneuver, wherein
- the driver assistance system (2) comprises a surroundings sensor system (3) which is configured to generate sensor data which represent a surroundings of the motor vehicle (1);
- the driver assistance system (2) comprises a computing unit (4) which is configured to determine at least one reference trajectory (7) for the motor vehicle (1) on the basis of on the sensor data, wherein the computing unit (4) is configured to determine a target trajectory (7) for the motor vehicle (1) as a first reference trajectory (7) of the at least one reference trajectory (7), wherein the target trajectory (7) contains a target position (8) of the parking maneuver for the motor vehicle (1), and to determine a modified target trajectory for the motor vehicle (1) as a second reference trajectory of the at least one reference trajectory, wherein the modified target trajectory contains a target position for the motor vehicle (1) which is modified with respect to the target position (8); and
- the driver assistance system (2) comprises a sensor system (5) which is configured to determine an actual value of a parameter of the motor vehicle (1), which is variable during the parking maneuver, at a time point during the parking maneuver;
- the computing unit (4) is configured to determine at least one predicted deviation of the parameter from a target value on the basis of the at least one reference trajectory (7) and the actual value; and
- the driver assistance system (2) comprises an actuator unit (6) which is configured to automatically generate a haptic signal as a steering recommendation for a driver of the motor vehicle (1) on the basis of the at least one predicted deviation.

8. Motor vehicle comprising a driver assistance system (2) according to claim 7.

## Revendications

1. Procédé d'assistance au stationnement pour un véhicule automobile (1) lors d'une manœuvre de stationnement dirigée manuellement, dans lequel
- au moyen d'un système de capteurs d'environnement (3) du véhicule automobile (1), des données de capteur sont générées, lesquelles représentent un environnement du véhicule automobile (1) ;
- au moyen d'une unité de calcul (4) du véhicule automobile (1), au moins une trajectoire de référence (7) pour le véhicule automobile (1) est déterminée en fonction des données de capteur ;
- au moyen de l'unité de calcul (4), une valeur réelle d'un paramètre du véhicule automobile (1), variable pendant la manœuvre de stationnement, est déterminée à un moment pendant la manœuvre de stationnement au moyen d'un système de capteurs (5) du véhicule automobile (1) ;
- au moyen de l'unité de calcul (4), au moins un écart prédit du paramètre par rapport à une valeur de consigne est déterminé en fonction de l'au moins une trajectoire de référence (7) et de la valeur réelle ;
- en fonction de l'au moins un écart prédit, un signal haptique est généré automatiquement en guise de recommandation de direction pour un conducteur du véhicule automobile (1) ;
- une trajectoire de consigne (7) pour le véhicule automobile (1) est déterminée en guise de première trajectoire de référence (7) de l'au moins une trajectoire de référence (7), dans lequel la trajectoire de consigne (7) contient une position cible (8) de la manœuvre de stationnement pour le véhicule automobile (1)
- une trajectoire de consigne modifiée pour le véhicule automobile (1) est déterminée en guise de seconde trajectoire de référence de l'au moins une trajectoire de référence ; et
- la trajectoire de consigne modifiée contient une position cible pour le véhicule automobile (1) modifiée par rapport à la position cible (8).

2. Procédé selon la revendication 1,
**caractérisé en ce que**
pour générer le signal haptique, un couple de direction supplémentaire est généré dans un système de direction du véhicule automobile (1).

3. Procédé selon l'une des revendications précédentes,
**caractérisé en ce que**
- une trajectoire du véhicule automobile (1) est prédite en fonction de la valeur réelle ; et
- un écart du paramètre selon la trajectoire cible (7) par rapport au paramètre selon la trajectoire prédite est déterminé en guise de premier écart prédit de l'au moins un écart prédit.

4. Procédé selon l'une des revendications précédentes,
**caractérisé en ce que**
un écart du paramètre selon la trajectoire de consigne modifiée par rapport à la valeur réelle est déterminé en guise de second écart prédit de l'au moins un écart prédit.

5. Procédé selon l'une des revendications précédentes,
**caractérisé en ce que**
- une valeur réelle modifiée est déterminée en fonction de la valeur réelle ; et
- un écart du paramètre selon la trajectoire de consigne (8) par rapport à la valeur réelle modifiée est déterminé en guise d'autre écart prédit de l'au moins un écart prédit.

6. Procédé selon l'une des revendications précédentes,
**caractérisé en ce que**
le signal haptique n'est généré que si l'un de l'au moins un écart prédit est supérieur ou égal à un écart minimum prédéfini.

7. Système d'assistance au conducteur pour un véhicule automobile (1) pour l'assistance au stationnement lors d'une manœuvre de stationnement dirigée manuellement, dans lequel
- le système d'assistance au conducteur (2) présente un système de capteurs d'environnement (3) qui est conçu pour générer des données de capteur, lesquelles représentent un environnement du véhicule automobile (1) ;
- le système d'assistance au conducteur (2) présente une unité de calcul (4) qui est conçue pour déterminer au moins une trajectoire de référence (7) pour le véhicule automobile (1) en fonction des données de capteur, dans lequel l'unité de calcul (4) est conçue pour déterminer une trajectoire de consigne (7) pour le véhicule automobile (1) en guise de première trajectoire de référence (7) de l'au moins une trajectoire de référence (7), dans lequel la trajectoire de consigne (7) contient une position cible (8) de la manœuvre de stationnement pour le véhicule automobile (1), et pour déterminer une trajectoire de consigne modifiée pour le véhicule automobile (1) en guise de seconde trajectoire de référence de l'au moins une trajectoire de référence, dans lequel la trajectoire de consigne modifiée contient une position cible pour le véhicule automobile (1) modifiée par rapport à la position cible (8) ; et
- le système d'assistance au conducteur (2) présente un système de capteurs (5) qui est conçu pour déterminer une valeur réelle d'un paramètre du véhicule automobile (1) variable pendant la manœuvre de stationnement à un moment pendant la manœuvre de stationnement ;
- l'unité de calcul (4) est conçue pour déterminer, en fonction de l'au moins une trajectoire de référence (7) et de la valeur réelle, au moins un écart prédit du paramètre par rapport à une valeur de consigne ; et
- le système d'assistance au conducteur (2) présente une unité d'actionneur (6) qui est conçue pour générer automatiquement, en fonction de l'au moins un écart prédit, un signal haptique en guise de recommandation de direction pour un conducteur du véhicule automobile (1).

8. Véhicule automobile comportant un système d'assistance au conducteur (2) selon la revendication 7.
